# EUROPÄISCHE PATENTSCHRIFT

(11) **EP 1 772 554 B1**
(45) Veröffentlichungstag und Bekanntmachung des Hinweises auf die Patenterteilung: **14.09.2011**
(21) Anmeldenummer: 06020535.8
(22) Anmeldetag: 29.09.2006
(51) Int. Cl.: D21B 1/32, D21D 5/06

(54) **Vorrichtung zum Aufbereiten von Faserstoffen**
Device for treating fibrous materials
Dispositif pour le traitement de matières fibreuses

(30) Priorität: 06.10.2005 AT 16372005
(43) Veröffentlichungstag der Anmeldung: 11.04.2007
(73) Patentinhaber: Andritz AG, 8045 Graz (AT)
(72) Erfinder: Gabl, Helmuth, Dipl.Ing. Dr., 8046 Graz (AT)
(74) Vertreter: Schweinzer, Friedrich

(56) Entgegenhaltungen:
- EP-A- 1 420 108
- EP-A1- 0 898 012
- WO-A-96/06973

## Beschreibung

Die Erfindung betrifft eine Vorrichtung zum Aufbereiten von Faserstoffen, mit einer Öffnung zum Zuführen von Faserstoff, einem durch eine Auflösetrommel gebildeten Auflöseteil und einem durch eine Sortiertrommel gebildeten Sortierteil.

Zur Faserstoffauflösung, insbesondere zur Vereinzelung von Fasern aus einem festen Verbund in einer wässrigen Suspension, insbesondere Faserstoffsuspensionen zur Papierwiederaufbereitung, ist es bekannt, mechanische Verfahren mittels Auflösetrommeln oder kontinuierlichen bzw. diskontinuierlichen Stofflösern anzuwenden. Zur anschließenden Abtrennung von Verunreinigungen, wie Störstoffen, die keine weiter verarbeitbaren Faserstoffe sind, werden in der Praxis Sortierer eingesetzt. Die beiden Prozesse, Stoffauflösung und Abtrennung, werden seriell ausgeführt, d.h. zuerst erfolgt die Zerfaserung und im Anschluss wird die aufgelöste Faserstoffsuspension in eine sog. Akzept-Fraktion, welche weitgehend von Grobverunreinigungen befreit ist, und in eine sog. Rejekt-Fraktion, welche die groben Verunreinigungen enthält, getrennt.

Zur Faserstoffauflösung mit anschließender Grobschmutzabscheidung werden zur Zeit neben Pulpern auch Auflösetrommeln eingesetzt. Beide Systemlösungen umfassen Vorrichtungen, mit denen die Faserstoff-suspension zeitlich unmittelbar nach der Auflösung bzw. Faservereinzelung in der Maschine vorsortiert werden wird.

Verfahren dieser Art sind aus dem Stand der Technik bekannt, doch ergeben sich aus deren Anwendung bei der Auflösung und Sortierung von Faserstoffsuspensionen einige Nachteile. Obwohl bei der Trommelauflösung eine Faservereinzelung durch einen anschließenden mitrotierenden Siebteil energetisch und faserschonend ausgeführt werden kann, besteht der Nachteil, dass der Platz- bzw. Raumbedarf zum Aufstellen der Trommel sehr groß ist. Zur leichteren Platzanpassung und getrennten Steuerung von Auflösung und Sortierung werden daher eine getrennte Aufstellung von Auflöse- und Sortierteil verwendet.

Die EP 0 898 012 A1 offenbart ein Verfahren und eine Vorrichtung zum Auflösen von Faserstoffen. Dabei wird eine im Wesentlichen horizontal liegende Trommel verwendet, die in ihrem Innenraum einen Verdrängungskörper aufweist wodurch ein Bearbeitungskanal zwischen Trommelaußenwand und Verdrängungskörper gebildet wird. Für eine Sortierung des Trommelinhaltes kann der Verdrängungskörper perforiert sein.

Die EP 1 420 108 A1 offenbart ebenfalls ein Verfahren und eine Vorrichtung zum Auflösen von Faserstoffen. Dabei kann die Auflösetrommel auch innerhalb der Sortiertrommel angeordnet sein.

Mit diesen räumlich einzeln angeordneten Auflöse- und Sortierteilen können zwar die oben erwähnten Vorteile teilweise erzielt werden, nicht jedoch die Kombination aus geringem Energieverbrauch, guter Auflösung, geringem Faserverlust und geringem Platz- und Raumbedarf.

Der Erfindung liegt die Aufgabe zu Grunde, eine Vorrichtung zur Aufbereitung von Faserstoffen, insbesondere Faserstoffsuspensionen zur Papierwiederaufbereitung, zur Verfügung zu stellen, welche die oben genannten Vorteile vereinigt.

Erfindungsgemäß wird diese Aufgabe mit einer Vorrichtung mit den Merkmalen des Anspruches 1 gelöst.

Des Weiteren wird diese Aufgabe gelöst mit einer Vorrichtung mit den Merkmalen des Anspruches 11.

Vorteilhafte und bevorzugte Ausführungsformen der Erfindung sind Gegenstand der Unteransprüche.

Erfindungsgemäß ist die Sortiertrommel wenigstens bereichsweise innerhalb der Auflösetrommel angeordnet, wodurch eine wesentliche Platzeinsparung und eine damit verbundene Senkung der Gebäudekosten erzielt wird. Durch die erfindungsgemäße Anordnung von Auflöseteil und Sortierteil kann eine Platzersparnis von bis zu 50% im Vergleich zu einer herkömmlichen Anordnung der beiden Teile erreicht werden, d.h. die Gesamtlänge der benötigten Einrichtungen kann bis auf die Hälfte reduziert werden. Außerdem ist erfindungsgemäß innerhalb der Sortiertrommel ein Sortierblech angeordnet.

Alternativ ist erfindungsgemäß die Auflösetrommel wenigstens bereichsweise innerhalb der Sortiertrommel angeordnet, wodurch sich im Wesentlichen die selben Vorteile ergeben, wie bei der oben beschriebenen Anordnung. Im Ringraum zwischen der Auflösetrommel und der Sortiertrommel ist ein Sortierblech angeordnet.

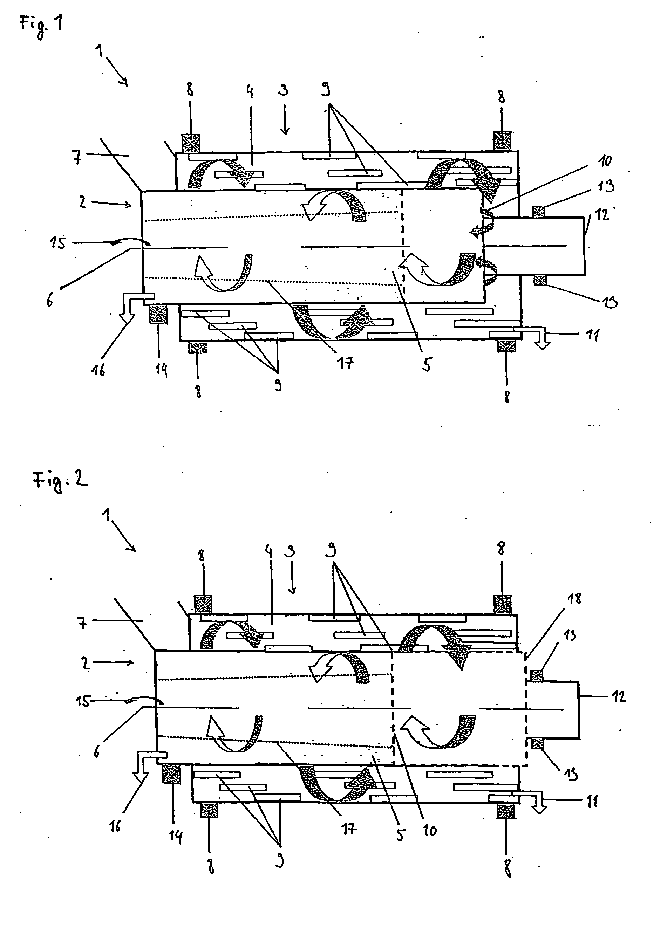

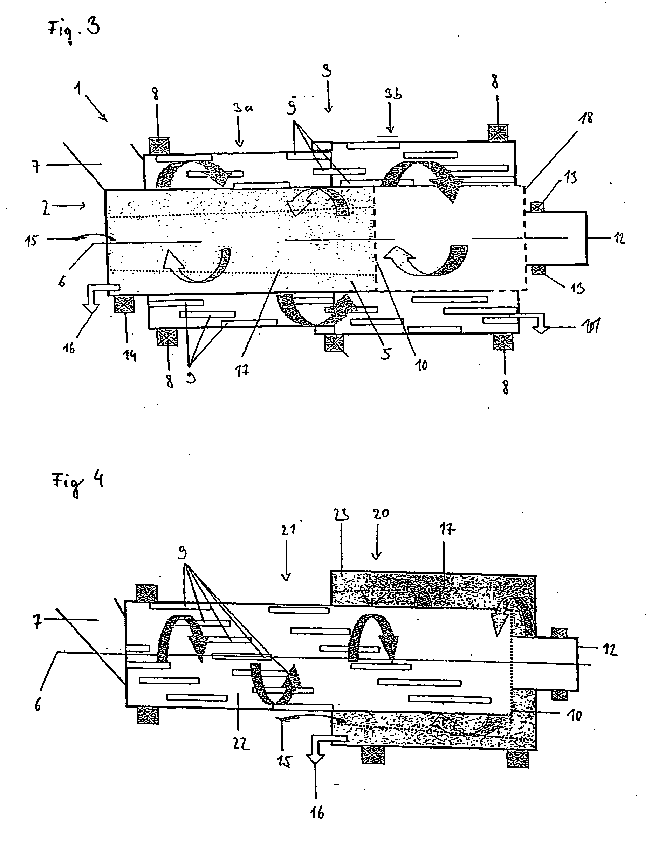

Weitere Einzelheiten und Vorteile der Erfindung ergeben sich aus der nachstehenden Beschreibung bevorzugter Ausführungsformen der Erfindung unter Bezugnahme auf die angeschlossenen Zeichnungen. Es zeigt: Fig. 1 eine erste Ausführungsform der erfindungsgemäßen Vorrichtung im Achsschnitt, Fig. 2 eine zweite Ausführungsform der erfindungsgemäßen Vorrichtung im Achsschnitt, Fig. 3 einen Achsschnitt einer Variante der erfindungsgemäßen Vorrichtung aus Fig. 2 und Fig. 4 eine vierte Ausführungsform der erfindungsgemäßen Vorrichtung im Achsschnitt, wobei der Sortierteil Bereichsweise um den Auflöseteil angeordnet ist.

In Fig. 1 ist eine Ausführungsform der erfindungsgemäßen Vorrichtung 1 dargestellt, die im Wesentlichen aus einer Kombination aus zwei Haupteinheiten, nämlich einem Auflöseteil 3 und einem Sortierteil 2, besteht, wobei der Sortierteil 2 innerhalb des Auflöseteils 3 angeordnet ist. Die Einheiten werden durch eine Auflösetrommel 4 bzw. eine Sortiertrommel 5 gebildet. Der Innendurchmesser der Auflösetrommel 4 liegt, wie an sich aus dem Stand der Technik bekannt, beispielsweise bei 3,5 bis 5,5m.

Durch die erfindungsgemäße Anordnung des Sortierteils 2 innerhalb des Auflöseteils 3 und kann eine Platzersparnis von bis zu 50% im Vergleich zu einer herkömmlichen Anordnung der beiden Teile erreicht werden, d.h. die Gesamtlänge der benötigten Einrichtungen kann bis auf die Hälfte reduziert werden.

Das Beschicken der um eine Drehachse 6 der Vorrichtung 1 rotierenden Auflösetrommel 4 mit aufzulösendem und zu reinigendem, rezyklierten Papier erfolgt über eine Öffnung 7. Die Auflösetrommel 4 wird mittels Lagern 8 gelagert und über einen nicht dargestellten Antrieb angetrieben.

Der Stofftransport erfolgt im Ringraum zwischen Auflösetrommel 4 und Sortiertrommel 5. Der Stofftransport im Auflöseteil 3 wird durch Mitnehmer an der Auflösetrommel 4, sogenannte Heber 9, unterstützt. Dadurch wird ein Auflösegrad bis 50% ermöglicht. Die Faserfriktionen erlauben trotz hoher Scherkräfte eine schonende Faservereinzelung bei geringstmöglicher Zerstörung der Störstoffe. Im letzten Drittel des axialen Stofftransportes (in Fig. 1 von links nach rechts) erfolgt die erste Grobsortierung. Hier treten die vereinzelten Fasern über Sortierelemente, in diesem Ausführungsbeispiel über große Lochbleche 10, axial und radial in die Sortiertrommel 5 ein. Erste anfallende Rejekte können an einem Auslass 11 aus der Vorrichtung 1 ausgetragen werden.
Die Grobvorsortierung kann durch Verändern, d.h. durch Vergrößern oder Verkleinern, der absoluten, offenen Fläche des Lochbleches 10 dem jeweiligen Fasertoffcharakter angepasst werden. Eine Vergrößerung der gesamten offenen Fläche kann z.B. über eine Verlängerung des Siebteils 2 erfolgen. Eine Verkleinerung der gesamten offenen Fläche kann z.B. durch bereichsweises Verschließen des Lochbleches 10 mit einer Abdeckung erfolgen, wobei die Größe der einzelnen, nicht abgedeckten Öffnungen im Lochblech 10 unverändert bleiben. Es ist auch möglich, dass das Lochblech 10 aus zwei im Wesentlichen identischen Lagen gebildet ist, so dass durch Verschieben bzw. Drehen der einen Lage gegenüber der anderen die Größe der einzelnen Öffnungen des Lochbleches 10 verändert werden kann.

Der Stofffluss wird am Ende des Auflöseteiles 3 umgelenkt und der innere Teil der Sortiertrommel 5 wird mit Faserstoffsuspension beaufschlagt. Vorteilhafterweise findet eine Verdünnung der Faserstoffsuspension im Bereich des Beginnes des Sortierteiles 2 statt. Der Sortierteil 2 kann je nach gewünschter Friktion im Auflöseteil 3 gleich- oder gegensinnig zur Auflösetrommel 4 gedreht werden. Die Geschwindigkeit ist variierbar, was wiederum eine sensible Behandlung der Faserstoffsuspension erlaubt.
Der Sortierteil 2 wird über einen Antrieb, im dargestellten Ausführungsbeispiel über einen Antriebszapfen 12, an seiner der Öffnung 7 gegenüberliegenden Stirnseite angetrieben. Ein erstes Lager 13 der Sortiertrommel 5 ist an dem Antriebszapfen 12 angeordnet. Ein zweites Lager 14 der Sortiertrommel 5 befindet sich im Bereich eines zweiten Rejekt-Auslasses 15 und eines Akzept-Auslasses 16.
Zum Abtrennen der Verunreinigungen aus der Faserstoffsuspension ist im Inneren der Sortiertrommel 5 ein kegelstumpfförmiges Sortierblech 17 angebracht, dessen Lochweiten über seine Länge oder seinen Umfang gleich bleiben oder variieren können. Entlang der Längserstreckung des Sortierbleches 17 werden die Verunreinigungen im Inneren der Sortiertrommel 5 zurückgehalten. Der Gutstoff, d.h. das Akzept, passiert das Lochblech 17 von innen nach außen und wird am Ende der Sortiertrommel 5 für die weitere Faserstoffbehandlung über den Akzept-Auslass 16 aus der Vorrichtung 1 abgeführt. Der Grobstoff verbleibt im Inneren der Sortiertrommel 5 und wird über den zweiten Rejekt-Auslass 15 ausgetragen.

Die Ausführungsform in Fig. 1 ist vorteilhaft in Bezug auf die notwendigen Flächenverhältnisse von Auflöseteil 3 und Sortierteil 2, welche im Normalfall bei ca. 2:1 liegt.

Die in Fig. 2 dargestellte Ausführungsform der erfindungsgemäßen Vorrichtung 1 ist vom grundsätzlichen Aufbau wie das Ausführungsbeispiel aus Fig. 1 ausgeführt, wobei jedoch die mit dem Antriebszapfen 12 verbundene Stirnseite 18 der Sortiertrommel 5 außerhalb der Auflösetrommel 4 angeordnet ist. Diese Variante weist den Vorteil einer größeren Sortierfläche gegenüber der Variante aus Fig. 1 auf. Bei sehr viel Grobschmutz wird bei der Vorrichtung 1 aus Fig. 2 bereits am Rejekt-Auslass 11 eine größere Menge der Verunreinigung ausgetragen.

In Fig. 3 ist eine zweigeteilte Ausführungsform des Auflöseteils 3 gezeigt. Der Auflöseteil 3 besteht aus einem Einweichteil 3a und einem getrennt davon antreibbaren Friktionsteil 3b.
Die äußere Oberfläche der Sortiertrommel 5 kann mit einer Schnecke ausgeführt werden. Der Vorteil liegt in einer sehr guten Auflösung. Falls der erste Teil des Auflöseteils 3 in seiner Drehzahl abgesenkt wird, agiert er als Einweichteil 3a für den Faserstoff, was zu einem besonders günstigen Energieverbrauch führt. Der zweite Teil 3b des Auflöseteils 3 dreht mit unveränderter Drehzahl. Dies begünstigt die Durchmischung im Sortierbereich und schwemmt Verunreinigungen besser aus, womit diese leichter sortierbar werden.

Während in den Fig. 1 bis 3 der Sortierteil 2 jeweils innerhalb des Auflöseteils 3 angeordnet ist, zeigt Fig. 4 ein Ausführungsbeispiel mit einem innerhalb des Sortierteils 20 liegenden Auflöseteil 21. Gegenüber den Ausführungsformen in den Fig. 1 bis 3 benötigt diese Art der Stoff-auflösung und Sortierung mehr Platz, da ein kleinerer Durchmesser des Auflöseteils 21 zu einer größeren Gesamtlänge der Auflösetrommel 22 führt. Zudem können bei dieser Ausführungsform keine zusätzlichen Friktionskräfte durch eine Gegendrehung der Sortiertrommel 23 und der Auflösetrommel 22 in die Faserstoffe eingeleitet werden.

Bei den erfindungsgemäßen Vorrichtungen in den Fig. 1 bis 4 ist der Füllgrad der Auflösetrommel 4,22 und der Sortiertrommel 5,23 in allen Ausführungsbeispielen gleich im Bereich von z.B. 50 bis 85%. Dadurch ist eine höhere spezifische Flächennutzung möglich und der spezifische Energieverbrauch wird abgesenkt.

Zusammenfassend kann ein Ausführungsbeispiel wie folgt beschrieben werden.
Eine Vorrichtung 1 zum Aufbereiten von Faserstoffen umfasst zwei Haupteinheiten, nämlich eine Auflösetrommel 4 und eine Sortiertrommel 5, wobei die Sortiertrommel 5 innerhalb der Auflöstrommel 4 angeordnet ist. Durch diese Kombination lässt sich eine platzsparende Abtrennung von Nichtfaserstoffen aus einer Faserstoffsuspension erzielen.

Der Faserstofftransport erfolgt in der Vorrichtung 1 axial und wird am Ende des Sortierteiles 2 in diesen umgelenkt. Eine zu gewinnende Akzeptfraktion passiert den Sortierteil 2 und wird für die weitere Faserstoffbehandlung aus der Vorrichtung 1 abgeführt.

## Patentansprüche

1. Vorrichtung zum Aufbereiten von Faserstoffen mit einer Öffnung (7) zum Zuführen von Faserstoff, einem durch eine Auflösetrommel (4) gebildeten Auflöseteil (3) und einem durch eine Sortiertrommel (5) gebildeten Sortierteil (2), wobei die Sortiertrommel (5) wenigstens bereichsweise innerhalb der Auflösetrommel (4) angeordnet ist, **dadurch gekennzeichnet, dass** innerhalb der Sortiertrommel (5) ein Sortierblech (17) angeordnet ist.

2. Vorrichtung nach Anspruch 1, **dadurch gekennzeichnet, dass** zwischen der Auflösetrommel (4) und Sortiertrommel (5) ein Ringraum gebildet ist.

3. Vorrichtung nach Anspruch 1 oder 2, **dadurch gekennzeichnet, dass** Auflösetrommel (4) und Sortiertrommel (5) unabhängig voneinander, insbesondere gegensinnig zueinander drehbar gelagert sind.

4. Vorrichtung nach einem der Ansprüche 1 bis 3, **dadurch gekennzeichnet, dass** der Auflöseteil (3) geteilt ist, und dass die wenigstens zwei Teile des Auflöseteils (3) getrennt voneinander, vorzugsweise gegensinnig zueinander, antreibbar sind.

5. Vorrichtung nach einem der Ansprüche 1 bis 4, **dadurch gekennzeichnet, dass** innerhalb der Auflösetrommel (4) Mitnehmer (9) angeordnet sind.

6. Vorrichtung nach einem der Ansprüche 1 bis 5, **dadurch gekennzeichnet, dass** die Sortiertrommel (5) über einen an der der Öffnung (7) gegenüberliegenden Stirnseite (18) der Sortiertrommel (5) angeordneten Antrieb angetrieben ist.

7. Vorrichtung nach einem der Ansprüche 1 bis 6, **dadurch gekennzeichnet, dass** im Bereich des der Öffnung (7) gegenüberliegenden Drittels der Auflösetrommel (4) ein Sortierelement, z.B. ein Lochblech (10), des Sortierteils (2) angeordnet ist.

8. Vorrichtung nach Anspruch 7, **dadurch gekennzeichnet, dass** die offene Fläche des Sortierelementes, z.B. des Lochbleches (10), veränderbar ist.

9. Vorrichtung nach einem der Ansprüche 1 bis 8, **dadurch gekennzeichnet, dass** das innerhalb der Sortiertrommel (5) angeordnete Sortierblech (17) kegel-stumpfförmig ist.

10. Vorrichtung nach einem der Ansprüche 1 bis 9, **dadurch gekennzeichnet, dass** der Innendurchmesser der Auflösetrommel (4) im Bereich von 3,5 bis 5,5 Meter liegt.

11. Vorrichtung zum Aufbereiten von Faserstoffen mit einer Öffnung (7) zum Zuführen von Faserstoff, einem durch eine Auflösetrommel (22) gebildeten Auflöseteil (21) und einem durch eine Sortiertrommel (23) gebildeten Sortierteil (20), wobei die Auflösetrommel (22) wenigstens bereichsweise innerhalb der Sortiertrommel (23) angeordnet ist, **dadurch gekennzeichnet, dass** im Ringraum zwischen der Auflösetrommel (22) und der Sortiertrommel (23) ein Sortierblech (17) angeordnet ist.

12. Vorrichtung nach Anspruch 11, **dadurch gekennzeichnet, dass** Auflösetrommel (22) und Sortiertrommel (23) unabhängig voneinander, insbesondere gegensinnig zueinander drehbar gelagert sind.

13. Vorrichtung nach einem der Ansprüche 11 oder 12, **dadurch gekennzeichnet, dass** innerhalb der Auflösetrommel (22) Mitnehmer (9) angeordnet sind.

14. Vorrichtung nach einem der Ansprüche 11 bis 13, **dadurch gekennzeichnet, dass** die Auflösetrommel (22) über einen an der der Öffnung (7) gegenüberliegenden Stirnseite (18) der Auflösetrommel (22) angeordneten Antrieb angetrieben ist.

15. Vorrichtung nach einem der Ansprüche 11 bis 14, **dadurch gekennzeichnet, dass** das Sortierblech (17) kegelstumpfförmig ist.

## Claims

1. Device for preparing fibre pulps, with an opening (7) to feed in the pulp, a pulping section (3) formed by a pulping drum (4), and a screening section (2) formed by a screening drum (5), where at least parts of the screening drum (5) are located inside the pulping drum (4), **characterised by** a screening plate (17) being mounted inside the screening drum (5).

2. Device according to Claim 1, **characterised by** an annular channel being formed between the pulping drum (4) and the screening drum (5).

3. Device according to Claim 1 or 2, **characterised by** the pulping drum (4) and the screening drum (5) being pivoted independently of one another, particularly in opposing directions.

4. Device according to one of Claims 1 to 3, **characterised by** the pulping section (3) being split and the at least two parts of the pulping section being suitable for driving separately from one another, preferably in opposing directions.

5. Device according to one of Claims 1 to 4, **characterised by** baffles (9) being mounted inside the pulping drum (4).

6. Device according to one of Claims 1 to 5, **characterised by** the screening section (5) being driven by a drive mounted on the face end (18) of the screening drum (5) opposite the opening (7).

7. Device according to one of Claims 1 to 6, **characterised by** a screening element, e.g. a perforated plate (10), being mounted in the vicinity of the pulping drum (4) third opposite the opening (7).

8. Device according to Claim 7, **characterised by** the open area of the screening element, e.g. the perforated plate (10), being adjustable.

9. Device according to one of Claims 1 to 8, **characterised by** the screening plate (17) located inside the screening drum (5) having a truncated cone shape.

10. Device according to one of Claims 1 to 9, **characterised by** the inner diameter of the pulping drum (4) being in the range of 3.5 to 5.5 metres.

11. Device for preparation of fibre pulps with an opening (7) to feed in the pulp, a pulping section (21) formed by a pulping drum (22), and a screening section (20) formed by a screening drum (23), where at least parts of the pulping drum (22) are located inside the screening drum (23), **characterised by** a screening plate (17) being located in the annular channel between the pulping drum (22) and the screening drum (23).

12. Device according to Claim 11, **characterised by** the pulping drum (22) and the screening drum (23) being pivoted independently of one another, particularly in opposing directions.

13. Device according to one of Claims 11 or 12, **characterised by** baffles (9) being mounted inside the pulping drum (22).

14. Device according to one of Claims 11 to 13, **characterised by** the pulping drum (22) being driven by a drive mounted on the face end (18) of the pulping drum (22) opposite the opening (7).

15. Device according to one of Claims 11 to 14, **characterised by** the screening plate (17) having a truncated cone shape.

## Revendications

1. Dispositif de préparation de pâtes fibreuses, comportant un orifice (7) pour l'alimentation en pâte, une partie de réduction en pâte (3) constituée par un tambour de réduction en pâte (4), et une partie de tamisage (2) constituée par un tambour tamiseur (5), où au moins des parties du tambour tamiseur (5) sont situées à l'intérieur du tambour de réduction en pâte (4), **caractérisé en ce qu'**une tôle à tamisage (17) est montée à l'intérieur du tambour tamiseur (5).

2. Dispositif selon la revendication 1, **caractérisé en ce qu'**une conduite annulaire est formée entre le tambour de réduction en pâte (4) et le tambour tamiseur (5).

3. Dispositif selon la revendication 1 ou 2, **caractérisé en ce que** le tambour de réduction en pâte (4) et le tambour tamiseur (5) sont logés indépendamment l'un de l'autre, de façon à tourner surtout en sens inverse l'un à l'autre.

4. Dispositif selon l'une des revendications 1 à 3, **caractérisé en ce que** la partie de réduction en pâte (3) est divisée et que les au moins deux parties de la partie de réduction en pâte (3) peuvent être actionnées indépendamment l'un de l'autre, de préférence en sens inverse l'un à l'autre.

5. Dispositif selon l'une des revendications 1 à 4, **caractérisé en ce que** des chicanes (9) se trouvent montées à l'intérieur du tambour de réduction en pâte (4).

6. Dispositif selon l'une des revendications 1 à 5, **caractérisé en ce que** le tambour tamiseur (5) est actionné par un entraînement situé à la face (18) du tambour tamiseur (5) opposée à l'orifice (7).

7. Dispositif selon l'une des revendications 1 à 6, **caractérisé en ce qu'**un élément tamiseur, par exemple une tôle perforée (10), de la partie de tamisage (2) est monté près du tiers du tambour de réduction en pâte (4) opposé à l'orifice (7).

8. Dispositif selon la revendication 7, **caractérisé en ce que** la surface ouverte de l'élément tamiseur, par exemple de la tôle perforée (10), est ajustable.

9. Dispositif selon l'une des revendications 1 à 8, **caractérisé en ce que** la tôle à tamisage (17) montée à l'intérieur du tambour tamiseur (5) a une forme tronconique.

10. Dispositif selon l'une des revendications 1 à 9, **caractérisé en ce que** le diamètre intérieur du tambour de réduction en pâte (4) se situe entre 3,5 et 5,5 mètres.

11. Dispositif de préparation de pâtes fibreuses, comportant un orifice (7) pour l'alimentation en pâte, une partie de réduction en pâte (21) constituée par un tambour de réduction en pâte (22), et une partie de tamisage (20) constituée par un tambour tamiseur (23), où au moins des parties du tambour de réduction en pâte (22) sont situées à l'intérieur du tambour tamiseur (23), **caractérisé en ce qu'**une tôle à tamisage (17) est montée dans la conduite annulaire entre le tambour de réduction en pâte (22) et le tambour tamiseur (23).

12. Dispositif selon la revendication 11, **caractérisé en ce que** le tambour de réduction en pâte (22) et le tambour tamiseur (23) sont logés indépendamment l'un de l'autre, de façon à tourner surtout en sens inverse l'un à l'autre.

13. Dispositif selon l'une des revendications 11 ou 12, **caractérisé en ce que** des chicanes (9) se trouvent montées à l'intérieur du tambour de réduction en pâte (22).

14. Dispositif selon l'une des revendications 11 à 13, **caractérisé en ce que** le tambour tamiseur (22) est actionné par un entraînement situé à la face (18) du tambour tamiseur (22) opposée à l'orifice (7).

15. Dispositif selon l'une des revendications 11 à 14, **caractérisé en ce que** la tôle à tamisage (17) a une forme tronconique.
